# EUROPÄISCHE PATENTSCHRIFT

(11) **EP 1 362 724 B1**
(45) Veröffentlichungstag und Bekanntmachung des Hinweises auf die Patenterteilung: **04.10.2006**
(21) Anmeldenummer: 03101329.5
(22) Anmeldetag: 14.05.2003
(51) Int. Cl.: B60H 1/00

(54) **Anschlusssystem für eine Kraftfahrzeug-Klimaanlage**
Connection system for an automotive air conditioner
Système de connection pour appareil de climatisation de véhicule

(30) Priorität: 14.05.2002 EP 02100491
(43) Veröffentlichungstag der Anmeldung: 19.11.2003
(73) Patentinhaber: Ford Global Technologies, LLC., Dearborn MI 48126 (US)
(72) Erfinder: Fischer, Dietmar, 50733 Koeln (DE); Heinz, Uwe, 41812 Erkelenz (DE); Boehme, Dietmar, 47259 Duisburg (DE)
(74) Vertreter: Drömer, Hans-Carsten

(56) Entgegenhaltungen:
- US-A- 5 005 375
- US-A- 5 293 902
- US-B1- 6 334 320

## Beschreibung

Die Erfindung bezieht sich auf eine Klimaanlage für Kraftfahrzeuge, die einen Anschlußstutzen für einen Druckschalter/-sensor enthält, der nach Entfernen des Druckschalters/-sensors zur Evakuierung und Befüllung der Klimaanlage geeignet ist, so daß die beiden üblicherweise getrennten Funktionen in einem Stutzen zusammenfaßt sind. Die Erfindung bezieht sich ferner auf einen Adapter, der es ermöglicht, eine Evakuier- und Befülleinheit an einem heute gebräuchlichen Anschlußstutzen für einen Druckschalter/-sensor anzuschließen. Dadurch wird die heute gebräuchliche zusätzliche Anordnung von Anschlußstutzen für die Evakuierung und Befüllung der Klimaanlage überflüssig.

Kraftfahrzeuge werden üblicherweise mit Brennkraftmaschinen angetrieben. Diese Brennkraftmaschinen werden wiederum mittels eines Kühlkreislaufes auf einem bestimmten Temperaturniveau gehalten. Zur Beheizung des Innenraumes eines Kraftfahrzeuges wird in der Regel das umlaufende Kühlmittel diese Kühlkreislaufes verwendet, welches über einen Wärmetauscher und ein Gebläse die enthaltene Wärme an den Innenraum abgibt.

Zur Kühlung des Innenraumes eines Kraftfahrzeuges werden zunehmend Klimaanlagen verwendet. Stand der Technik ist es, wie beschrieben in Vieweg Handbuch Kraftfahrzeugtechnik 2. Auflage, April 2001, S. 5 ff., dabei einen Kältemittelkompressor mechanisch von der Brennkraftmaschine eines Kraftfahrzeuges antreiben zu lassen. Das Kältemittel wird vom Kompressor durch einen Kondensator, der die Wärme aus dem Kältemittel abführt, und einen Sammler zum Expansionsventil gefördert. Hier entspannt sich das im Kompressor verdichtete Kältemittel und verdampft anschließend im Verdampfer und entzieht so in bekannter Weise der Umgebungsluft Wärme. In der Regel wird der Verdampfer in das Heizungsgehäuse integriert, so daß das Gebläse und die Luftverteilung der Kraftfahrzeugheizung mitbenutzt werden können. Vom Verdampfer wird das Kältemittel zurück zum Kompressor geführt und somit der Kältemittelkreislauf geschlossen.

Alternativ zum Expansionsventil wird als Drosselorgan häufig ein Kapillarröhrchen eingesetzt. Dieses ist wesentlich preiswerter als ein Expansionsventil, allerdings muß dann der erwähnte Sammler durch einen ungefähr doppelt so großen Akkumulator in der Leitung vom Verdampfer zurück zum Kompressor ersetzt werden.

Die Regelung von Klimaanlagen mit Kapillarröhrchen wird üblicherweise über ein geeignetes druckempfindliches Bauteil wie einen Druckschalter oder Drucksensor vorgenommen, welches ebenfalls in der Leitung zwischen Verdampfer und Kompressor angeordnet ist. Hierbei wird der Umstand ausgenutzt, daß bei dem gebräuchlichen Kältemittel 134a ein direkter Zusammenhang zwischen Druck und Temperatur besteht, so daß vom gemessenen Druck auf die Temperatur geschlossen werden kann. Dieser Druckschalter bzw. Drucksensor ist üblicherweise über ein Befestigungsgewinde mit einem entsprechend ausgebildeten Anschlußstutzen an einer Klimaanlagenleitung befestigt, wobei der Anschlußstutzen ein federbelastetes Einwegeventil enthält, das in seinem Aufbau gebräuchlichen Kraftfahrzeugräderventilen sehr ähnlich ist. Der Anschlußstutzen selber wird in der Regel an einer Klimaanlagenleitung angeschweißt oder angelötet.

Unabhängig von der Art der Klimaanlagenregelung wird üblicherweise ein weiterer Stutzen zum Anschluß eines Druckschalters bzw. -sensors an der Hochdruckleitung zwischen Kompressor und Regeleinheit, sowohl bei Anlagen mit Expansionsventil als auch bei Anlagen mit Kapillarröhrchen, angebracht. Dieser Druckschalter bzw. -sensor dient im allgemeinen als Hochdrucksicherheitselement zur Abschaltung des Kompressors bei zu hohen Drücken und wird zur Steuerung eines Kühlerventilators herangezogen.

Zur Befüllung mit Kältemittel sind an den Kältemittelleitungen Service- und oder Füllstutzen angebracht. Auch diese Anschlußstutzen enthalten federbelastete Ventile. Über diese Anschlußstutzen werden mittels genormter Schnellkupplungen die Evakuierung und Erstbefüllung der Klimaanlage durchgeführt bzw. während des Kraftfahrzeuglebens Servicearbeiten erledigt. Auch diese Anschlußstutzen werden üblicherweise an die Klimaanlagenleitungen geschweißt oder gelötet.

Die übliche Füllmenge für eine Klimaanlage eines Kraftfahrzeuges liegt heute nach Vieweg bei ca. 600 bis 900g R 134a. Ein sicherer Betrieb der Klimaanlage ist gewährleistet, solange sich noch ca. 70% der ursprünglichen Füllmenge im Kältemittelkreislauf befinden. Nachteilig ist es bei heutigen Klimaanlagen, daß geringe Mengen Kältemittel durch die Schläuche und Dichtringe der Klimaanlage entweichen können. Es ist daher von Vorteil die Zahl der Dichtstellen möglichst gering zu halten.

Da jeder Anschlußstutzen eine zusätzliche Lötoperation erfordert, bedeutet eine Verringerung der Zahl Anschlußstutzen daher eine deutliche Reduzierung der Anzahl der Lötoperationen, außerdem ergibt sich ein geringfügig geringerer Materialverbrauch. Des Weiteren können so zwei Ventile entfallen.

US 6 334 320 B offenbart als nächsten Stand der Technik ein Anschlußstück für eine Klimaanlage mit jeweils einem Anschlußstutzen für einen Drucksensor und für einen Befüllschlauch.

Vor diesem Hintergrund war es die Aufgabe der vorliegenden Erfindung, eine Klimaanlage zu entwickeln, die eine verringerte Anzahl von Anschlußstutzen aufweist, um dadurch die Anzahl der Dichtstellen zu verringern, sowie gleichzeitig den Material- und Produktionsaufwand zu reduzieren.

Diese Aufgabe wird durch eine Klimaanlage für Kraftfahrzeuge mit den Merkmalen des Anspruches 1 gelöst. Weitere vorteilhafte Ausgestaltungen sind in den Unteransprüchen enthalten.

Erfindungsgemäß werden ein oder mehrere Anschlußstutzen einer Klimaanlage für Kraftfahrzeuge zur Montage von Druckschaltern oder -sensoren verwendet. Dabei kommen je nach Ausführung der Klimaanlage ein Niederdruckschalter oder -sensor und/oder ein Hochdruckschalter/-sensor zum Einsatz. Jeder Anschlußstutzen wird dabei so ausgeformt, daß nach Entfernen des Druckschalters/-sensors der Anschluß einer Schnellkupplung einer Evakuierund Befülleinheit möglich ist. Dadurch wird die heute gebräuchliche zusätzliche Anordnung von Anschlußstutzen für die Evakuierung und Befüllung der Klimaanlage überflüssig und so die Anzahl der Dichtstellen verringert. Gleichzeitig ergeben sich so Kosteneinsparungen aus dem verringerten Materialeinsatz und der weniger komplexen Produktion. Es ist allerdings eine Modifikation der zur Zeit in Großserie produzierten Druckschalter/-sensoren nötig.

In einer vorteilhaften Ausgestaltung der Erfindung enthalten der oder die oben genannten Anschlußstutzen ein Ventil. Dieses Ventil öffnet bei der Montage eines Druckschalters/-sensors bzw. durch Anschließen der Schnellkupplung einer Evakuier- und Befülleinheit und schließt automatisch bei der Demontage eines Druckschalters/-sensors bzw. bei Abnehmen der Schnellkupplung einer Evakuier- und Befülleinheit. Dies hat den Vorteil, daß bei der Montage bzw. Demontage von Druckschaltern/-sensoren und bei Anschließen oder Abnehmen von Schnellkupplungen einer Evakuier- und Befülleinheit kein Kältemittel unkontrolliert den Klimaanlagenkreislauf verlassen und in die Umwelt gelangen kann.

Eine weitere Ausgestaltung der Erfindung sieht vor, nach Entfernen eines Druckschalters/-sensors der Klimaanlage zunächst einen Adapter auf dem so frei gewordenen Anschlußstutzen der Klimaanlage zu montieren, um dann die Evakuier- und Befülleinrichtung anschließen zu können. Diese Ausgestaltung hat den Vorteil, daß die heutigen in Großserie gefertigten Druckschalter/sensoren bzw. Schnellkupplungen unverändert weiterverwendet werden können. Dadurch wird die heute gebräuchliche zusätzliche Anordnung von Anschlußstutzen für die Evakuierung und Befüllung der Klimaanlage überflüssig. In einer vorteilhaften Weiterbildung der Erfindung ist der Adapter so ausgebildet, daß das Ventil im Anschlußstutzen bei Anschluß der Evakuier- und Befüllanlage geöffnet wird. Hierdurch wird die Handhabung spürbar vereinfacht.

In einer vorteilhaften Weiterbildung der Erfindung wird in den Adapter ein Einwegeventil integriert. Bei dieser Variante wird das Einwegeventil im Anschlußstutzen beim Anbringen des Adapters geöffnet, so daß wie beim bekannten Betrieb einer Evakuier- und Befülleinrichtung, die Evakuier- und Befülleinrichtung direkt an den Klimaanlagenkreislauf angeschlossen werden kann.

In einer vorteilhaften Weiterbildung der Erfindung werden sowohl das Ventil im Anschlußstutzen als auch das Ventil im Adapter bei Anschluß der Evakuier- und Befüllanlage geöffnet. Hierdurch wird die Handhabung spürbar vereinfacht.

Eine vorteilhafte Weiterbildung der Erfindung zeichnet sich dadurch aus, daß der Adapter mindestens zwei Ventile enthält. Diese Variante bietet eine besonders hohe Sicherheit gegen Kältemittelverlust.

Bei einer vorteilhaften Ausgestaltung der Variante mit mindestens zwei Ventilen öffnet ein Ventil sobald der Adapter am Stutzen angebracht wird während ein zweites Ventil bei Anschluß des Evakuier- und Befüllgerätes geöffnet wird. Die Benutzerfreundlichkeit wird so deutlich gesteigert.

Bei einer weiteren vorteilhaften Ausgestaltung der Erfindung wird der erfindungsgemäße Adapter in eine Evakuier- und Befülleinheit integriert. Dies hat den Vorteil, daß der erfindungsgemäße Adapter sich jederzeit an der Evakuier- und Befüllanlage befindet und nicht eventuell im Werkstattbetrieb oder während der Produktion verlegt werden kann.

Bei weiteren vorteilhaften Ausgestaltungen der Erfindung weist der Adapter mindestens einen weiteren Anschluß oder Abzweig auf, der z. B. zum Anschluß eines Druckmeßgerätes geeignet ist. Durch diesen mindestens einen Abzweig lassen sich in dem Adapter mehr als nur die reine Anschlußfunktion für die Evakuier- und Befüllanlage integrieren.

Eine Weiterbildung der Erfindung sieht vor, den mindestens einen Druckschalter/-sensor so auszuformen, daß er einen Anschluß in der Art einer Schnellkupplung der Evakuier- und Befülleinrichtung aufweist. So kann die gebräuchliche Form der Füll-/ bzw. Serviceanschlußstutzen beibehalten werden, während die heute gebräuchliche zusätzliche Anordnung von Anschlußstutzen für den Druckschalter/-sensor der Klimaanlage überflüssig wird.

Die Erfindung wird anhand der in der beiliegenden Zeichnungen gezeigten Ausführungsbeispiele näher erläutert. Es zeigen
Fig. 1 eine schematischen Skizze einer bevorzugten Ausführung eines Anschlußstutzens der erfindungsgemäßen Klimaanlage
Fig. 2 eine Skizze des erfindungsgemäßen Adapters
Fig. 3 eine Skizze einer weiteren Ausführung des erfindungsgemäßen Adapters
Fig. 4 eine Skizze eines erfindungsgemäßen Druckschalters/-sensors
Fig. 5 eine Skizze einer weiteren Ausführung des erfindungsgemäßen Adapters mit einem zusätzlichen Abzweig

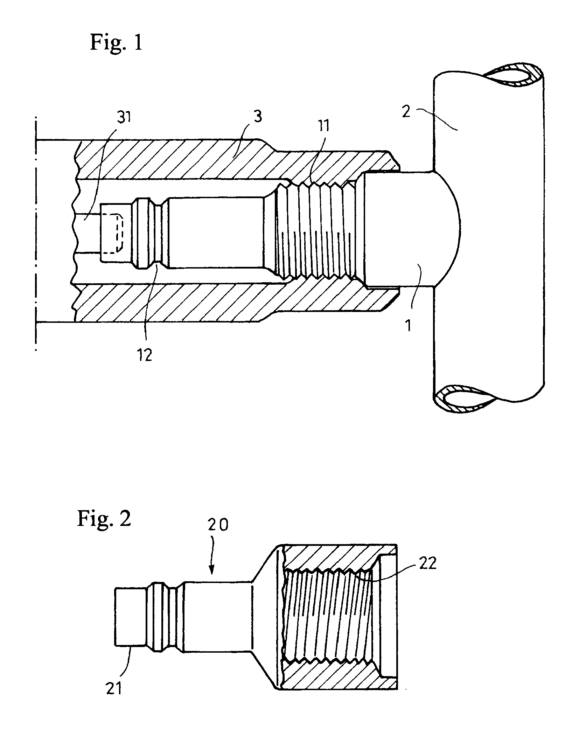

Figur 1 zeigt eine schematische Zeichnung eines Teils der erfindungsgemäßen Klimaanlage. Ein Anschlußstutzen 1 ist dabei im Bild mit einer Leitung 2 der Klimaanlage stoffschlüssig verbunden. Ein Druckschalter 3 ist über das Gewinde 11 mit dem Anschlußstutzen 1 verschraubt. Ein hervorstehendes Teil 31 des Druckschalters 3 hält dabei das Einwegeventil (hier nicht gezeigt) offen, so daß eine direkte Druckmessung des Kältemitteldruckes in der Leitung 2 der Klimaanlage möglich ist. Wird nun der Druckschalter 3 entfernt, schließt das integrierte Einwegeventil. Der der Klimaanlagenleitung 2 abgewandte Teil des Anschlußstutzens 1 ist nun frei und ermöglicht die Montage einer Schnellkupplung einer Evakuier- und Befülleinheit, wobei die Schnellkupplung in der Nut 12 einrasten kann.

In Figur 2 ist eine mögliche Ausführung des erfindungsgemäßen Adapters 20 dargestellt. Dabei ist das Ende 21 des Adapters 20 so ausgeformt, daß es zur Montage einer Schnellkupplung einer Evakuier- und Befülleinheit geeignet ist. Das andere Ende 22 des Adapters 20 weist hingegen ein Gewinde auf, welches dem Gewinde eines heute gebräuchlichen Druckschalters/-sensors entspricht, so daß eine Montage auf einem Anschlußstutzen einer Klimaanlage für Druckschalter/-sensoren möglich ist.

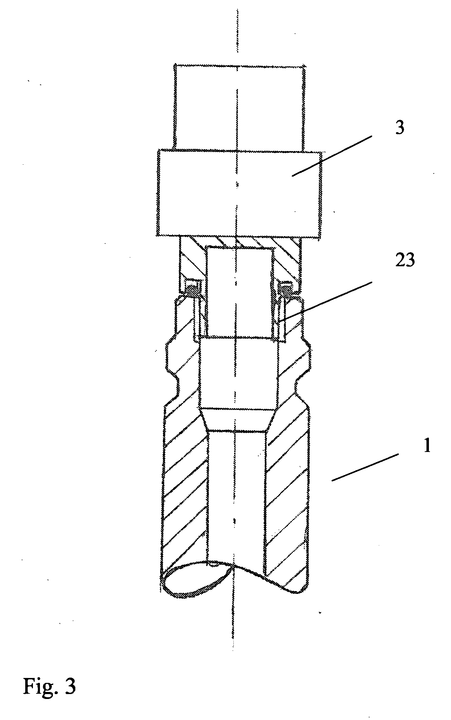

Figur 3 zeigt einen Teil eines erfindungsgemäßen Adapter 20, bei dem durch Ausformen eines Innengewindes 23 an einem sonst bekannten Anschlußstutzen 1, der geeignet ist zum Anschluß einer Evakuier- und Befülleinheit, die Möglichkeit zur Aufnahme eines Druckschalters 3 geschaffen wurde.

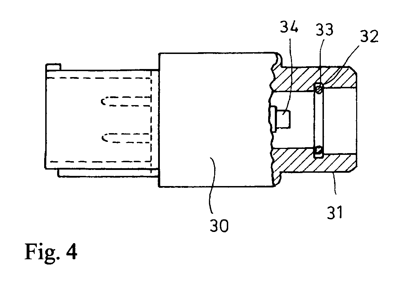

Figur 4 zeigt einen erfindungsgemäßen Druckschalter/-sensor (30). Das Ende 31 ist dabei so ausgeformt, daß es wie eine Schnellkupplung einer Evakuierund Befülleinheit auf einen Anschlußstutzen montiert werden kann. Die Nut 32 enthält dabei einen Federring 33, der in bekannter Weise bei einer Schnellkupplung für eine Verriegelung sorgt. Der gezeigte zylindrische Absatz 34 dient bei der Montage zum Öffnen des in der Regel in einem Anschlußstutzen enthaltenen Einwegeventils.

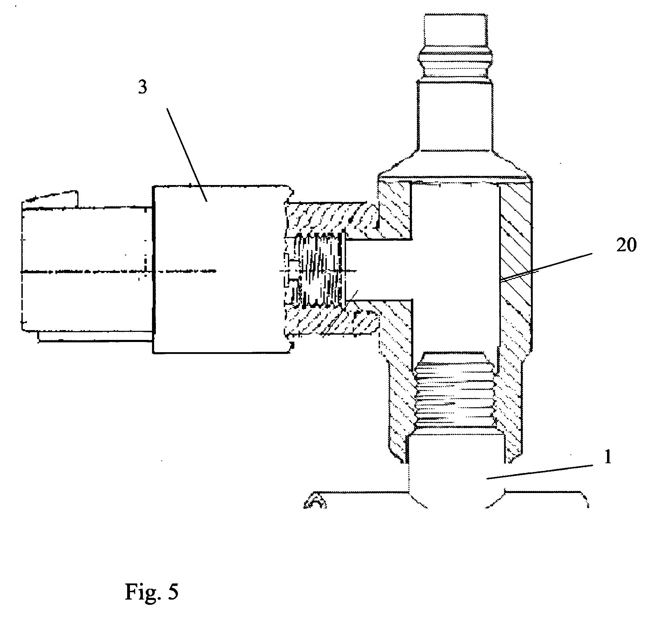

Figur 5 schließlich zeigt eine weitere Ausführung des erfindungsgemäßen Adapters 20 aufgeschraubt auf einen Stutzen 1 und versehen mit einem zusätzlichen Abzweig für einen Druckschalter 3.

## Patentansprüche

1. Klimaanlage für Kraftfahrzeuge mit mindestens einem Anschlußstutzen und einem Druckschalters/-sensors (3), zur Regelung der Klimaanlage und/oder als Hochdrucksicherheitselement,
**dadurch gekennzeichnet, daß**
der mindestens eine Anschlußstutzen (1) und der Druckschalter/-sensor (3) entweder in der Art ausgeformt sind, daß der Anschlußstutzen (1) wahlweise sowohl für den Anschluß des Druckschalters/-sensors (3) als auch für den Anschluß einer Evakuier- und Befülleinrichtung mit genormter Schnellkupplung geeignet ist, oder
ein Adapter (20) vorgesehen ist, über den der mindestens eine Anschlußstutzen (1) an die Schnellkupplung der Evakuier- der Evakuier- und Befülleinrichtung anschließbar ist.

2. Klimaanlage für Kraftfahrzeuge nach Anspruch 1,
**dadurch gekennzeichnet, daß**
der mindestens eine Anschlußstutzen (1) ein Ventil enthält.

3. Klimaanlage für Kraftfahrzeuge nach Anspruch 2,
**dadurch gekennzeichnet, daß**
der Adapter (20) so ausgeformt ist, daß beim Anschließen der Evakuier- und Befülleinrichtung das Ventil im Anschlußstutzen (1) geöffnet wird.

4. Klimaanlage für Kraftfahrzeuge nach Anspruch 1 oder 2,
**dadurch gekennzeichnet, daß**
der Adapter (20) ein Ventil enthält.

5. Klimaanlage für Kraftfahrzeuge nach Anspruch 4, rückbezogen auf Anspruch 2,
**dadurch gekennzeichnet, daß**
der Adapter (20) so ausgeformt ist, daß beim Anschließen der Evakuier- und Befülleinrichtung sowohl das Ventil im Adapter (20) als auch das Ventil im Anschlußstutzen (1) geöffnet wird.

6. Klimaanlage für Kraftfahrzeuge nach einem der Ansprüche 1 oder 2,
**dadurch gekennzeichnet, daß**
der Adapter (20) mindestens zwei Ventile enthält.

7. Klimaanlage für Kraftfahrzeuge nach Anspruch 6,
**dadurch gekennzeichnet, daß**
der Adapter (20) so ausgeformt ist, daß beim Anschließen der Evakuier- und Befülleinrichtung mindestens ein Ventil im Adapter (20) geöffnet wird.

8. Klimaanlage für Kraftfahrzeuge nach einem der Ansprüche 1 bis 6
**dadurch gekennzeichnet, daß**
der Adapter (20) in der Evakuier- und Befülleinrichtung integriert ist.

9. Klimaanlage für Kraftfahrzeuge nach einem der vorherigen Ansprüche
**dadurch gekennzeichnet, daß**
der Adapter (20) mindestens einen weiteren Anschluß oder Abzweig ausweist.

10. Klimaanlage für Kraftfahrzeuge nach Anspruch 9,
**dadurch gekennzeichnet, daß**
der Anschluß oder Abzweig zur Aufnahme eines Druckschalters (3) oder Drucksensors geeignet ist und/oder mit einem Druckschalter (3) oder Drucksensor versehen ist.

11. Klimaanlage für Kraftfahrzeuge nach Anspruch 1 oder 2,
**dadurch gekennzeichnet, daß**
der Druckschalter/-sensor (3) eine Schnellkupplung enthält, die entsprechend der Schnellkupplung der Evakuier- und Befülleinheit ausgeformt ist.

## Claims

1. Air conditioning system for motor vehicles having at least one connecting piece and one pressure switch/sensor (3) for controlling the air conditioning system and/or as a high-pressure safety element,
**characterized in that**
the at least one connecting piece (1) and the pressure switch/sensor (3) are either formed such that the connecting piece (1) is selectively suitable both for connecting the pressure switch/sensor (3) and for connecting an evacuating and filling device with a standardized quick-action coupling, or
an adaptor (20) is provided, by means of which the at least one connecting piece (1) can be connected to the quick-action coupling of the evacuating and filling device.

2. Air conditioning system for motor vehicles according to Claim 1,
**characterized in that**
the at least one connecting piece (1) contains a valve.

3. Air conditioning system for motor vehicles according to Claim 2,
**characterized in that**
the adaptor (20) is formed in such a way that when the evacuating and filling device is connected, the valve in the connecting piece (1) is opened.

4. Air conditioning system for motor vehicles according to Claim 1 or 2,
**characterized in that**
the adaptor (20) contains a valve.

5. Air conditioning system for motor vehicles according to Claim 4 referred back to Claim 2,
**characterized in that**
the adaptor (20) is formed in such a way that when the evacuating and filling device is connected, both the valve in the adaptor (20) and the valve in the connecting piece (1) are opened.

6. Air conditioning system for motor vehicles according to Claim 1 or 2,
**characterized in that**
the adaptor (20) contains at least two valves.

7. Air conditioning system for motor vehicles according to Claim 6,
**characterized in that**
the adaptor (20) is formed in such a way that when the evacuating and filling device is connected, at least one valve in the adaptor (20) is opened.

8. Air conditioning system for motor vehicles according to one of Claims 1 to 6,
**characterized in that**
the adaptor (20) is integrated in the evacuating and filling device.

9. Air conditioning system for motor vehicles according to one of the preceding claims,
**characterized in that**
the adaptor (20) has at least one further connection or branch.

10. Air conditioning system for motor vehicles according to Claim 9,
**characterized in that**
the connection or branch is suitable for holding a pressure switch (3) or pressure sensor and/or is provided with a pressure switch (3) or pressure sensor.

11. Air conditioning system for motor vehicles according to Claim 1 or 2,
**characterized in that**
the pressure switch/sensor (3) contains a quick-action coupling which is formed in a corresponding manner to the quick-action coupling of the evacuating and filling unit.

## Revendications

1. Installation de climatisation pour véhicules automobiles comprenant au moins un ajutage et un interrupteur à pression / capteur de pression (3) pour la régulation de l'installation de climatisation et/ou servant d'élément de sécurité haute pression,
**caractérisée en ce que**
l'au moins un ajutage (1) et l'interrupteur à pression / capteur de pression (3) soit sont réalisés de telle manière que l'ajutage (1) soit approprié au choix à la fois pour le raccord de l'interrupteur / capteur de pression (3) et pour le raccord d'un dispositif d'évacuation et de remplissage avec un accouplement rapide standardisé soit un adaptateur (20) est prévu, par le biais duquel l'au moins un ajutage (1) peut être raccordé à l'accouplement rapide du dispositif d'évacuation et de remplissage.

2. Installation de climatisation pour véhicules automobiles selon la revendication 1,
**caractérisée en ce que**
l'au moins un ajutage (1) contient une soupape.

3. Installation de climatisation pour véhicules automobiles selon la revendication 2,
**caractérisée en ce que**
l'adaptateur (20) est réalisé de telle sorte que lors du raccord du dispositif d'évacuation et de remplissage, la soupape soit ouverte dans l'ajutage (1).

4. Installation de climatisation pour véhicules automobiles selon la revendication 1 ou 2,
**caractérisée en ce que**
l'adaptateur (20) contient une soupape.

5. Installation de climatisation pour véhicules automobiles selon la revendication 4, lorsqu'elle se rapporte à la revendication 2,
**caractérisée en ce que**
l'adaptateur (20) est réalisé de telle sorte que lors du raccord du dispositif d'évacuation et de remplissage, la soupape dans l'adaptateur (20) ainsi que la soupape dans l'ajutage (1) soient ouvertes.

6. Installation de climatisation pour véhicules automobiles selon l'une quelconque des revendications 1 ou 2,
**caractérisée en ce que**
l'adaptateur (20) contient au moins deux soupapes.

7. Installation de climatisation pour véhicules automobiles selon la revendication 6,
**caractérisée en ce que**
l'adaptateur (20) est réalisé de telle sorte que lors du raccord du dispositif d'évacuation et de remplissage, au moins une soupape dans l'adaptateur (20) soit ouverte.

8. Installation de climatisation pour véhicules automobiles selon l'une quelconque des revendications 1 à 6,
**caractérisée en ce que**
l'adaptateur (20) est intégré dans le dispositif d'évacuation et de remplissage.

9. Installation de climatisation pour véhicules automobiles selon l'une quelconque des revendications précédentes,
**caractérisée en ce que**
l'adaptateur (20) présente au moins un raccord ou branchement supplémentaire.

10. Installation de climatisation pour véhicules automobiles selon la revendication 9,
**caractérisée en ce que**
le raccord ou le branchement est prévu pour recevoir un interrupteur à pression (3) ou un capteur de pression et/ou est pourvu d'un interrupteur à pression (3) ou d'un capteur de pression.

11. Installation de climatisation pour véhicules automobiles selon la revendication 1 ou 2,
**caractérisée en ce que**
l'interrupteur à pression / capteur de pression (3) contient un accouplement rapide, qui est réalisé de manière correspondant à l'accouplement rapide de l'unité d'évacuation et de remplissage.
